Europäisches Patentamt

European Patent Office

Office européen des brevets

(11) Veröffentlichungsnummer: **0 386 409**
**A2**

(12) **EUROPÄISCHE PATENTANMELDUNG**

(21) Anmeldenummer: **90100682.5**

(22) Anmeldetag: **13.01.90**

(51) Int. Cl.⁵: **A22C 13/02**

(30) Priorität: **08.03.89 DE 3907488**

(43) Veröffentlichungstag der Anmeldung:
**12.09.90 Patentblatt 90/37**

(84) Benannte Vertragsstaaten:
**AT BE CH DE DK ES FR GB IT LI NL**

(71) Anmelder: **Kollross, Günter**
**Am Wallerstädter Weg 20**
**D-6080 Gross Gerau-Dornheim(DE)**

(72) Erfinder: **Kollross, Günter**
**Am Wallerstädter Weg 20**
**D-6080 Gross Gerau-Dornheim(DE)**

(74) Vertreter: **Beyer, Werner, Dipl.-Ing. et al**
**Patentanwälte Dipl.-Ing. Werner Beyer**
**Dipl.-Wirtsch.-Ing. Bernd Jochem**
**Staufenstrasse 36 Postfach 17 01 45**
**D-6000 Frankfurt/Main(DE)**

(54) **Verfahren zum Verpacken eines zu einer hohlzylindrischen Raupe gerafften Schlauchhüllenabschnitts in ein Schlauchnetz für die spätere Verarbeitung als Wursthülle auf einem Wurstfüllautomaten.**

(57) Das Verpacken eines zu einer hohizylindrischen Raupe gerafften Schlauchhüllenabschnitts in ein Schlauchnetz erfolgt dergestalt, daß zunächst beim Raffen mit Hilfe eines auf dem Raffrohr verschieblichen Anschlags ein Anfangsabschnitt des Schlauchhüllenstrangs ungerafft belassen wird. Nach Beendigung des Raffens wird das Raffrohr mit dem Anschlag aus der Schlauchraupe herausgezogen, und der ungeraffte Schlauchhüllenabschnitt wird eingeschnürt und verschlossen. Schließlich wird der verschlossen Schlauchhüllenzipfel in die Raupe hineingestoßen und zusammen mit dieser durch einen zylindrischen Träger hindurchgeschoben, auf dem ein zur Schlauchraupe verschlossenes Schlauchnetz aufgerafft ist. Dieses wird beim Durchschieben der Schlauchraupe umgestülpt und umschließt diese auf ihrer gesamten Länge. Schließlich wird das Schlauchnetz mit der darin eingeschlossenen Schlauchraupe am anderen Ende an zwei aufeinanderfolgenden Stellen verschlossen und dazwischen durchtrennt. Bei der Weiterverarbeitung der Raupe braucht diese nur gewässert und das entgegengesetzte Ende der Netzverpackung aufgerissen zu werden, um die Raupe auf das Füllrohr aufzustecken und sofort mit dem Füllen beginnen zu können.

Die Erfindung betrifft ein Verfahren zum Verpacken eines zu einer hohlzylindrischen Raupe gerafften Schlauchhüllenabschnitts in ein Schlauchnetz für die spätere Verarbeitung als Wursthülle auf einem Wurstfüllautomaten, wobei das dem Verpacken unmittelbar vorausgehende Raffen auf einem sich in das offene Ende eines Schlauchhüllenstrangs erstreckenden und Blähluft in diesen einleitenden Raffrohr erfolgt, auf dem die Schlauchhülle durch ein Raffwerkzeug unter Faltenbildung gegen einen gesteuert zurückweichenden Anschlag geschoben und nach Erreichen der gewünschten Länge vom Schlauchhüllenstrang unter Entfernung des Raffrohrs abgetrennt wird.

Ein solches Verfahren ist aus der DE-OS 31 38 685 bekannt.

Derartige Schlauchnetzverpackungen gewährleisten nicht nur den Zusammenhalt der Raupe beim Transport und der Lagerung vor ihrer Weiterverarbeitung; sie gestatten außerdem eine schnelle und durchgreifende Wässerung der Raupe am Einsatzort, nachdem der Raupe nach ihrer Herstellung zur Verhinderung der Keimvermehrung während des Transports und der Lagerung weitgehend die zum Raffen benötigte Feuchtigkeit wieder entzogen worden ist. Dabei soll die Raupe nach dem Wässern mit möglichst wenig Handgriffen aus der Netzverpackung gelöst und füllbereit auf das Füllrohr des Wurstfüllautomaten aufgesteckt werden können.

Die nach dem bekannten Verfahren hergestellten Raupen erfüllen diese Bedingungen nur zum Teil, da sie an beiden Enden offen sind und deshalb vor dem Füllen zunächst an dem über das Füllrohr überstehenden Ende verschlossen werden müssen. Darüber hinaus ist das an das Raffen anschließende Verpacken mit dem bekannten Verfahren umständlich und zeitraubend und erfordert einen beträchtlichen Vorrichtungsaufwand.

Aufgabe der Erfindung ist es, ein Verfahren der eingangs genannten Art zu schaffen, welches schneller und weniger aufwendig als das bekannte Verfahren durchgeführt werden kann und bei dem außerdem ein Ende des gerafften und in das Schlauchnetz eingeschlossenen Schlauchhüllenabschnitts bereits verschlossen ist, so daß nach dem Wässern nur noch das entgegengesetzte Ende der Netzverpackung aufgerissen werden muß, um die Raupe auf das Füllrohr aufstecken und sofort mit dem Füllen beginnen zu können.

Erfindungsgemäß wird diese Aufgabe dadurch gelöst, daß ein Anfangsabschnitt des Schlauchhüllenstrangs vor dem Beginn der Faltenbildung über den geringfügig kleiner als die geöffnete Schlauchhülle ausgebildeten Anschlag hinaus bis zu einem zweiten Anschlag vorgeschoben wird, um am Raffvorgang nicht teilzunehmen, daß mit dem Entfernen des Raffrohrs auch der Anschlag aus dem ungerafften Anfangsabschnitt der Schlauchraupe entfernt und dieser zu einem Schlauchhüllenzipfel eingeschnürt und verschlossen wird, daß der Schlauchhüllenzipfel durch eine axial auf ihn einwirkende Kraft in die Schlauchraupe hineingestoßen und zusammen mit dieser durch einen zylindrischen Träger hindurchgeschoben wird, auf dem ein zur Schlauchraupe hin verschlossenes Schlauchnetz aufgerafft ist, so daß dieses beim Durchschieben der Schlauchraupe umgestülpt wird und die Schlauchraupe auf ihrer gesamten Länge umschließt, und daß schließlich das Schlauchnetz mit der darin eingeschlossenen Schlauchraupe am anderen Ende an zwei aufeinanderfolgenden Stellen verschlossen und dazwischen durchtrennt wird.

Durch das Vorschieben des Anfangsabschnitts des Schlauchhüllenstrangs über den beim Raffen wirksamen Anschlag hinaus wird ein ungeraffter Schlauchhüllenabschnitt geschaffen, der mit herkömmlichen Verschlußwerkzeugen unmittelbar nach der Herstellung der Schlauchraupe verschlossen werden kann, wodurch das bisher nötige Wiederabziehen und Glätten des vorderen Endes der bereits auf das Füllrohr aufgeschobenen Schlauchraupe zur Bildung eines Anfangsverschlusses für den zu füllenden Strang entfällt. Der bei dem Verschließen entstehende Zipfel wird dann durch die axial wirkende Kraft in das innere der Raupe gedrückt und gleichzeitig diese in einem Zug durch den zylindrischen Träger mit dem darauf in geraffter Form aufgezogenen Schlauchnetz hindurchgeschoben, welches hierbei sich umstülpt und von selbst die Schlauchraupe auf ihrer gesamten Länge umschließt, so daß schließlich nur noch das andere Ende des Schlauchnetzes verschlossen werden muß, wobei gleichzeitig der Anfangsverschluß für die nächste Netzverpackung hergestellt und die in das Schlauchnetz eingeschlossene Schlauchraupe vom Netzvorrat abgetrennt werden kann. All diese Verfahrensschritte erfolgen zügig im Anschluß an das Herstellen der Schlauchraupe und erfordert zu ihrer Durchführung durchweg einfache und, was das Verschließen anbetrifft, herkömmliche Mittel, wodurch der Vorrichtungsaufwand kleingehalten wird.

Nach einem ersten Merkmal zu vorteilhaften Ausgestaltung der Erfindung erfolgt das Verschließen der Schlauchraupe und des Schlauchnetzes mit Verschlußklammern, wie dies heutzutage größtenteils üblich ist und mit herkömmlichen Geräten schnell und sicher praktiziert werden kann.

Ein anderes Merkmal zur vorteilhaften Ausgestaltung der Erfindung sieht vor, daß die Schlauchraupe vor dem Entfernen des Raffrohrs und des Anschlags an ihrer Außenseite mechanisch erfaßt und nach dem Entfernen zur Durchführung der weiteren Verfahrensschritte zur Seite bewegt wird. Hierdurch werden die Totzeiten zwischen zwei aufeinanderfolgenden Raffvorgängen kleingehalten, und bei der bekannten Verwendung von Revolvereinrichtungen mit wenigstens zwei Raffrohren kann während des Entfernens des Raffrohrs und des Anschlags von der Schlauchraupe bereits auf einem zweiten Rohr gerafft werden, so daß sich abgesehen von den Umschaltzeiten des Revolvers keine weiteren Totzeiten ergeben.

Vorstehendes Ausgestaltungsmerkmal der Erfindung kann außerdem noch dadurch weiterentwikkelt werden, daß das Einschnüren und Verschließen des ungerafften Anfangsabschnitts der Schlauchhülle in einer ersten seitlichen Stellung und das Hineinstoßen des Schlauchhüllenzipfels und das Hindurchschieben durch den zylindrischen Träger in einer zweiten seitlichen Stellung durchgeführt werden, so daß die für die vorstehenden Verfahrensschritte erforderlichen Vorrichtungen und Werkzeuge an ihrem Platz verbleiben können.

Noch ein weiteres Merkmal zur vorteilhaften Ausgestaltung der Erfindung sieht vor, daß das Abziehen des Schlauchnetzes vom zylindrischen Träger beim Hindurchschieben der Schlauchraupe mechanisch gebremst wird. Hierdurch wird eine feste Verpackung der Schlauchraupe gewährleistet und ein Öffnen der Falten während des Transports und der Lagerung sowie auch dem späteren Wässern mit Sicherheit vermieden.

Schließlich ist es nach einem letzten Ausgestaltungsmerkmal der Erfindung zweckmäßig, daß zum Hineinstoßen des Schlauchhüllenzipfels und Hindurchschieben der Schlauchraupe durch den zylindrischen Träger ein zylindrischer Stempel mit flachkonisch angespitztem Stirnende verwendet wird, der vorzugsweise vor dem Verschließen des Schlauchnetzes wieder in die Ausgangsstellung zurückgezogen wird, während das umgestülpte Schlauchnetz mit der darin eingeschlossenen Schlauchraupe gespannt gehalten wird.

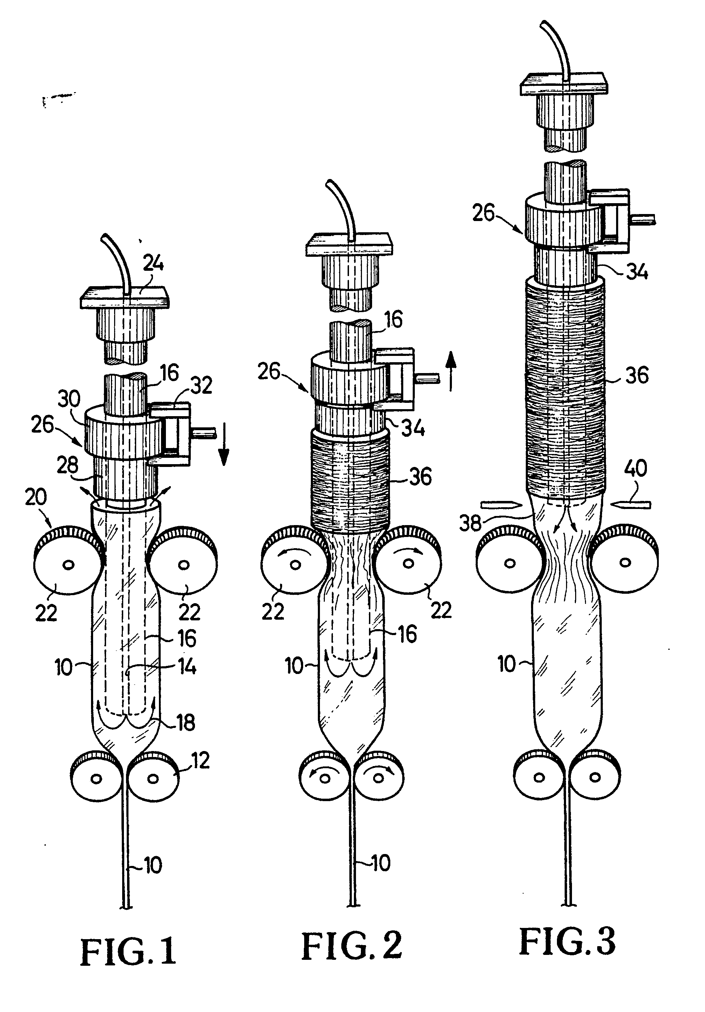

Die Erfindung wird nachstehend anhand der Zeichnung näher erläutert, in welcher die einzelnen Verfahrensschritte in den Fig. 1 bis 9 nacheinander veranschaulicht sind.

In den Fig. 1 bis 3 ist eine herkömmliche Raffvorrichtung zum Herstellen von zu Raupen gerafften Schlauchhüllenabschnitten aus einem beliebig langen Schlauchhüllenstrang schematisch dargestellt. Der in flachem Zustand von einer (nicht gezeigten) Haspel kommende Schlauchhüllenstrang 10 passiert zunächst ein Quetschwalzenpaar 12, das die Schlauchhülle abdichtet. Hinter dem Quetschwalzenpaar 12 wird der Schlauchhüllenstrang 10 durch ein mit einer Bohrung versehenes Raffrohr 16 geöffnet, indem durch die Bohrung 16 zugeleitete Blähluft, wie bei 18 angedeutet, in den offenen Schlauchhüllenstrang 10 eingeblasen wird. Der aufgeblasene Schlauchhüllenstrang 10 passiert schließlich ein Raffwerkzeug 20, das mit zwei Raffrollen 22 schematisch angedeutet ist, die den Schlauchhüllenstrang bis zum Raffrohrumfang einschnüren und bei ihrer Drehung zugleich vorschieben.

Anstelle der gezeigten zwei Raffrollen 22 können auch drei oder noch mehr Raffrollen am Hüllenumfang verteilt sein, oder es kann mit anderen Raffwerkzeugen wie beispielsweise einer rotierend angetriebenen Innenschnecke gearbeitet werden, wie sie beispielsweise aus der DE-PS 21 47 498 bekannt ist. Welche Art Raffwerkzeug verwendet wird, spielt für das hier betrachtete Verfahren keine Rolle, da allen Raffwerkzeugen das Vorschieben des Schlauchhüllenmaterials zum Zwecke des Raffens gemeinsam ist.

Fig. 1 zeigt die Anfangsposition des Schlauchhüllenstrangs vor dem Raffen einer neuer Schlauchraupe. Die Quetschwalzen 12 und das Raffwerkzeug 20, nämlich die Raffrollen 22 stehen still, und der Schlauchhüllenstrang 10 erstreckt sich ein Stück über die Raffrollen 22 hinaus, wo er durch die bei 18 eingeleitete Blasluft in Offenstellung mit ringsum etwa gleichgroßem Abstand zum Raffrohr 16 gehalten wird. Das Raffrohr 16 kann mit seinem anderen Ende an einer Halte rung 24 angebracht sein, die in den Fig. 1 bis 3 als Platte angedeutet ist, die durch einen (nicht gezeigten) Kraftzylinder in Längsrichtung des Raffrohres 14 verschoben werden kann. Anstelle der Platte kann das Raffrohr auch mit einem weiteren oder gar mehreren weiteren Raffrohren an einer axial verschieblichen Revolvereinrichtung angebracht sein, wie sie beispielsweise aus der DE-OS 29 24 059 bekannt ist.

Auf dem Raffrohr 16 ist eine Anschlaghülse 26 verschieblich angeordnet, die zum Raffwerkzeug 20 hin einen verjüngten zylindrischen Abschnitt 28 aufweist. Der am entgegengesetzten Ende der Anschlaghülse 26 verbleibende dickere Bund 30 kann von einem gabelförmigen Greifer 32 erfaßt und über diesen von einem (nicht gezeigten) Kraftzylinder längs dem Raffrohr 16 gesteuert verschoben werden.

In Fig. 1, in welcher das Raffrohr 16 vollständig in das geöffnete Ende des Schlauchhüllenstrangs 10 eingeschoben ist, befindet sich die Anschlaghülse 26 mit ihrem verjüngten Abschnitt 28 unmittelbar vor dem Öffnungsende des Schlauchhüllenstrangs und kann aufgrund der den Strang zentrierenden Blasluft in diesen bis unmittelbar vor das Raffwerkzeug 22 hineingeschoben werden.

Nun beginnt das Raffen, indem die Raffrollen 22 durch einen (nicht gezeigten) Antrieb in Drehung versetzt werden und das Schlauchhüllenmaterial in Richtung zur Anschlaghülse 26 vorschieben. Dabei verbleibt zunächst ein Anfangsabschnitt 34 des Schlauchhüllenstrangs 10 ungerafft auf dem verjüngten Teil 28 der Anschlaghülse 26, dessen Querschnitt nur geringfügig kleiner als der Innenquerschnitt des geöffneten Schlauchhüllenstrangs ausgebildet ist. Sobald das Ende des Schlauchhüllenstrangs 10 gegen den Bund 30 stößt, beginnt sich der Schlauchhüllenstrang 10 vor dem verjüngten Teil 28 der Anschlaghülse 26 in Falten zu legen und bildet eine Raupe 36, die mit zunehmenden Vorschieben des Schlauchhüllenstrangs immer länger wird, während gleichzeitig die Anschlaghülse 26 diesem Längenzuwachs über den Greifer gesteuert ausweicht.

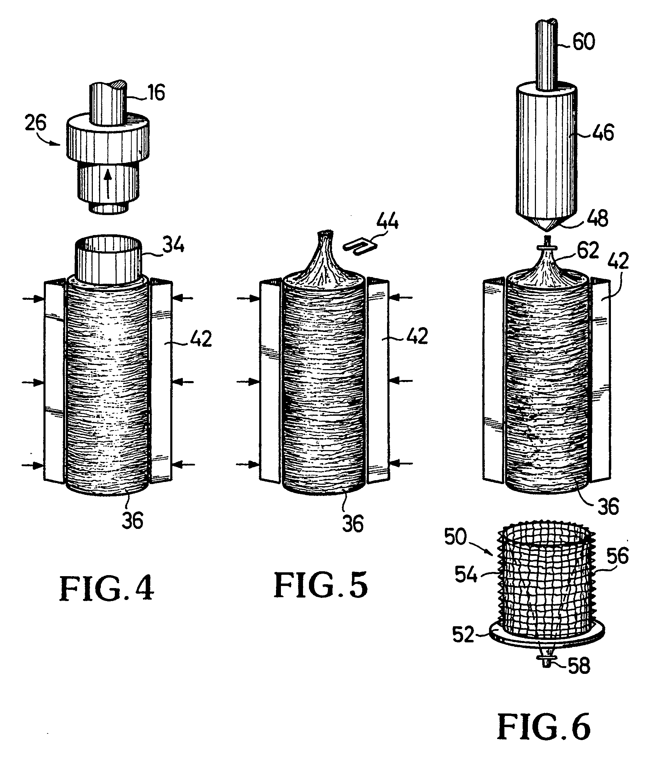

Wenn schließlich, wie in Fig. 3 gezeigt, die gewünschte Raupenlänge erreicht ist, wird die Raupe 36 mit Hilfe des Raffrohres 16 und der Anschlaghülse 26 noch ein Stück weiter vorbewegt, wodurch vor den Raffrollen 22 ein ungeraffter Schlauchhüllenbereich 38 entsteht, an dem die Schlauchraupe 36 vom Schlauchhüllenstrang 10 durch eine Schneideinrichtung, beispielsweise ein Messerpaar 40 abgetrennt werden kann. In dieser Stellung ist das Raffrohr 16 vollständig aus dem Raffwerkzeug 20 herausgezogen und kann nun beispielsweise mit Hilfe des oben erwähnten Revolvers in eine seitlich zum Raffwerkzeug 20 versetzte Stellung gebracht werden, in der die Schlauchraupe 36 gemäß Fig. 4 von einer Halteeinrichtung 42, beispielsweise einer Prismenzange erfaßt wird. Die Prismenzange 42 ermöglicht ein Trennen der Schlauchraupe 36 von der Anschlaghülse 26, indem entweder letztere weiter nach oben bewegt wird oder aber die Prismenzange mit der Schlauchraupe nach unten abgezogen wird. Dadurch wird der ungeraffte Schlauchhüllenabschnitt 34 am oberen Ende der Schlauchraupe 36 frei und kann gemäß Fig. 5 eingeschnürt und, beispielsweise durch eine Verschlußklammer 44 mit Hilfe einer (nicht gezeigten) bekannten Klippvorrichtung verschlossen werden.

Das Verschließen der Schlauchraupe 36 am ungerafften Schlauchhüllenabschnitt 34 kann in derselben Position erfolgen, in der zuvor gemäß Fig. 4 die Anschlaghülse 26 von der Raupe 36 getrennt worden ist. Die Raupe 36 kann jedoch mit Hilfe der Prismenzange 42 zum Verschließen auch in eine weitere seitlich versetzte Stellung gebracht werden, aus der die verschlossene Raupe dann, wiederum mit Hilfe der Prismenzange, in eine Verpackungsstellung gemäß Fig. 6 gebracht wird. In dieser Verpackungsstellung befindet sich die Schlauchraupe 36 auf gleicher Achse zwischen einem zylindrischen Stempel 46, dessen zur Schlauchraupe weisendes Ende 48 flachkonisch ausgebildet ist, und einer Netzverpackungseinrichtung 50, die aus einem mit einem Bund 52 am unteren Ende versehenen zylindrischen Träger 54 besteht, auf den von oben her ein Schlauchnetz 56 aufgerafft ist. Das obere Ende des Schlauchnetzes 56 ist durch eine Verschlußklammer 58 verschlossen und über den oberen Öffnungsrand des Trägers 54 nach innen und unten unter gleichzeitiger Umstülpung soweit durchgezogen, daß das verschlossene Ende aus dem Träger 54 vorsteht.

Der Stempel 46 befindet sich an einer Stange 60 und kann mit dieser von einem (nicht gezeigten) Kraftzylinder axial hin und her verschoben werden.

Sobald die Prismenzange 42 mit der Schlauchraupe 36 die in Fig. 4 gezeigte Stellung erreicht hat, öffnet die Prismenzange 42 ein wenig, und der Stempel 46 fährt, wie in Fig. 7 gezeigt, nach unten, wobei das flachkonische Ende 48 des Stempels zunächst den von der Verschlußklammer 44 gebildeten Verschlußzipfel 62 der Schlauchraupe in diese hineinstößt und hieraufhin die gesamte Schlauchraupe in den hülsenförmigen Träger 54 und durch diesen hindurch in die Stellung nach Fig. 8 verschiebt. Dabei erfaßt das untere Ende der Schlauchraupe 36 das umgestülpte Schlauchnetzende und zieht dieses weiter von dem hülsenförmigen Träger über dessen oberen Rand ab, so daß die gesamte Schlauchraupe schließlich, wie in Fig. 8 dargestellt, von dem Schlauchnetz 56 eingeschlossen ist.

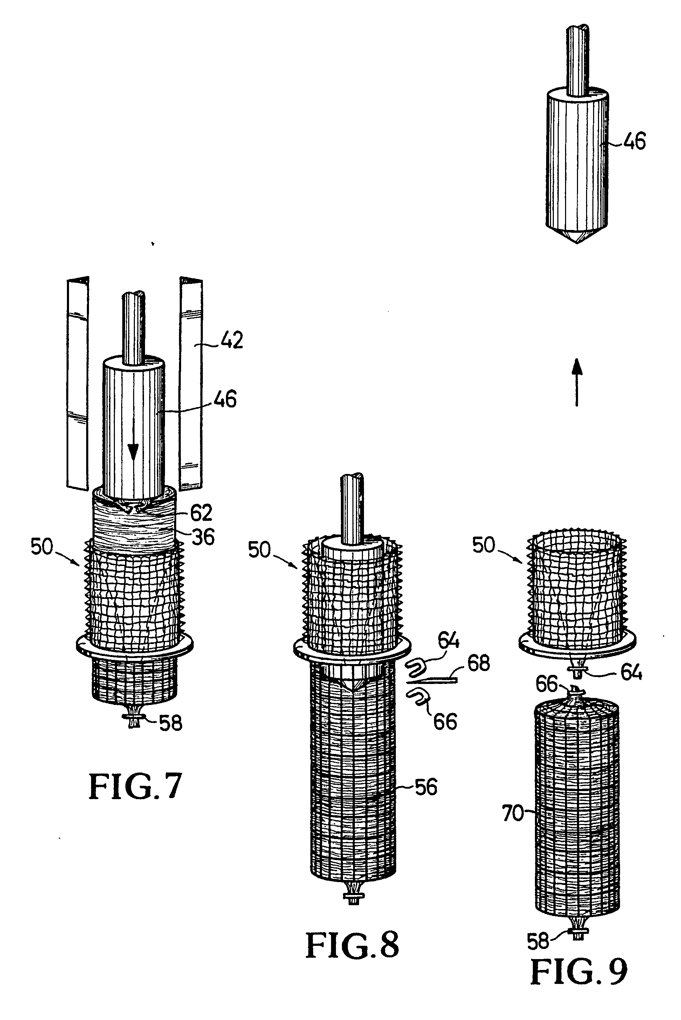

Nun fährt der Stempel 46 wieder in die Ausgangslage zurück, während die in das Schlauchnetz eingeschlossene Schlauchraupe 36 durch eine nicht gezeigte Rückhalteeinrichtung in der in Fig. 8 gezeigten Stellung zurückgehalten wird und dadurch zwischen dem unteren Ende des zylindrischen Trägers 54 und der eingeschlossenen Schlauchraupe 36 ein raupenfreier Netzabschnitt gebildet wird, der nach entsprechender Einschnürung durch zwei Verschlußklammern 64, 66 verschlossen und dazwischen von einem Messer 68 durchtrennt wird. Dadurch wird, wie aus Fig. 9 ersichtlich, eine vollständig in ein Schlauchnetz eingeschlossene und am oberen Ende verschlossene Schlauchraupe 70 geschaffen, während das übrige Schlauchnetz wieder die Ausgangsstellung nach Fig. 6 für das Einführen und Verschließen der nächsten Schlauchraupe einnimmt.

**Ansprüche**

1. Verfahren zum Verpacken eines zu einer hohlzylindrischen Raupe gerafften Schlauchhüllenabschnitts in ein Schlauchnetz für die spätere Verarbeitung als Wursthülle auf einem Wurstfüllautomaten, wobei das dem Verpakken unmittelbar vorausgehende Raffen auf einem sich in das offene Ende eines Schlauchhüllenstrangs erstreckenden und Blähluft in diesen einleitenden Raffrohr erfolgt, auf dem die Schlauchhülle durch ein Raffwerkzeug unter Faltenbildung gegen einen gesteuert zurückweichenden Anschlag geschoben und nach Erreichen der gewünschten Länge vom Schlauchhüllenstrang unter Entfernung des Raffrohrs abgetrennt wird, **dadurch gekennzeichnet**, daß ein Anfangsabschnitt des Schlauchhüllenstrangs vor dem Beginn der Faltenbildung über den geringfügig kleiner als die geöffnete Schlauchhülle ausgebildeten Anschlag hinaus bis zu einem zweiten Anschlag vorgeschoben wird, um am Raffvorgang nicht teilzunehmen, daß mit dem Entfernen des Raffrohrs auch der Anschlag aus dem ungerafften Anfangsabschnitt der Schlauchraupe entfernt und dieser zu einem Schlauchhüllenzipfel eingeschnürt und verschlossen wird, daß der Schlauchhüllenzipfel durch eine axial auf ihm einwirkende Kraft in die Schlauchraupe hineingestoßen und zusammen mit dieser durch einen zylindrischen Träger hindurchgeschoben wird, auf dem ein zur Schlauchraupe hin verschlossenes Schlauchnetz aufgerafft ist, so daß dieses beim Durchschieben der Schlauchraupe umgestülpt wird und die Schlauchraupe auf ihrer gesamten Länge umschließt, und daß schließlich das Schlauchnetz mit der darin eingeschlossenen Schlauchraupe am anderen Ende an zwei aufeinander folgenden Stellen verschlossen und dazwischen durchtrennt wird.

    2. Verfahren nach Anspruch 1, **dadurch gekennzeichnet**, daß das Verschließen der Schlauchraupe und des Schlauchnetzes mit Verschlußklammern erfolgt.

    3. Verfahren nach Anspruch 1 oder 2, **dadurch gekennzeichnet**, daß die Schlauchraupe vor dem Entfernen des Raffrohrs und des Anschlags an ihrer Außenseite mechanisch erfaßt und nach dem Entfernen zur Durchführung der weiteren Verfahrensschritte zur Seite bewegt wird.

    4. Verfahren nach Anspruch 3, **dadurch gekennzeichnet**, daß das Einschnüren und Verschließen des ungerafften Anfangsabschnitts der Schlauchhülle in einer ersten seitlichen Stellung und das Hineinstoßen des Schlauchhüllenzipfels und das Hindurchschieben durch den zylindrischen Träger in einer zweiten seitlichen Stellung durchgeführt werden.

    5. Verfahren nach einem der vorhergehenden Ansprüche, **dadurch gekennzeichnet**, daß das Abziehen des Schlauchnetzes vom zylindrischen Träger beim Hindurchschieben der Schlauchraupe mechanisch gebremst wird.

    6. Verfahren nach einem der vorhergehenden Ansprüche, **dadurch gekennzeichnet**, daß zum Hineinstoßen des Schlauchhüllenzipfels und Hindurchschieben der Schlauchraupe durch den zylindrischen Träger ein zylindrischer Stempel mit flach konisch angespitztem Stirnende verwendet wird.

    7. Verfahren nach Anspruch 6, **dadurch gekennzeichnet**, daß der Stempel vor dem Verschließen des Schlauchnetzes wieder in die Ausgangsstellung zurückgezogen wird, während das umgestülpte Schlauchnetz mit der darin eingeschlossenen Schlauchraupe gespannt gehalten

wird.

FIG.1

FIG.2

FIG.3

FIG.4

FIG.5

FIG.6

FIG.7

FIG.8

FIG.9